# EUROPEAN PATENT SPECIFICATION

(11) **EP 3 670 904 B1**
(45) Date of publication and mention of the grant of the patent: **10.05.2023**
(21) Application number: 19218629.4
(22) Date of filing: 20.12.2019
(51) Int. Cl.: F04B 1/04, F04B 53/02, F04B 53/04, F04B 53/14, F04B 53/16

(54) **A PUMPING DEVICE**
PUMPVORRICHTUNG
DISPOSITIF DE POMPAGE

(30) Priority: 20.12.2018 IT 201800020389
(43) Date of publication of application: 24.06.2020
(73) Proprietor: Leuco S.p.A., 42124 Reggio Emilia (IT)
(72) Inventor: DALL'ASTA, Dario, 42124 REGGIO EMILIA (IT)
(74) Representative: Colò, Chiara

(56) References cited:
- EP-A1- 2 722 526
- EP-A1- 2 860 396
- US-A1- 2011 027 106

## Description

The present invention relates to a pumping device.

In particular, the present invention relates to a pumping device for dispensing a liquid in a desired environment.

The pumping device according to the invention is particularly suitable for processing a cleaning liquid, such as water, possibly mixed with detergent substances, and conveying this liquid onto a surface to be cleaned.

The pumping device according to the invention can be used for example in a high-pressure water jet machine.

Piston pumps are known comprising a plurality of pistons that are movable inside respective cylinders to increase or decrease the volume of corresponding chambers, so as to cause the suction of water into each chamber, or the exit of the water from the chamber.

Each chamber is provided with a suction valve, through which water can enter the chamber, and a delivery valve, through which the water can exit the chamber.

The pistons, which can be made in a single piece or be formed by multiple components, are usually partially housed inside a casing or pump case, which also contains a driving device arranged for moving the pistons forwards or backwards inside the respective cylinders.

In particular, the driving device can comprise a driving shaft rotatably housed inside the casing and which can be coupled with a suitable drive shaft of a motor designed to drive the pump.

The delivery valves and the suction valves are instead housed in a head of the pump, which is fixed to the casing for example through screws.

In the known pumps, the pistons are slidable inside respective guide holes formed on the inside of the casing. One or more seals are instead provided in the head, in contact with which the pistons move.

A drawback of the known pumps is that the seals tend to wear relatively quickly, especially if, for example due to inaccuracies in manufacture or assembly, the axis of each piston is not perfectly aligned with the axis of the corresponding hole obtained in the casing. If this occurs, the pistons exert forces on the corresponding seals directed transversely with respect to the axis of the piston, which can compromise the sealing capacity of the seal itself. Consequently, the liquid processed by the pump can seep through the seals, which causes a decrease in efficiency of the pump.

An example of a known pump is disclosed in EP 2860396.

In this context, the technical task underlying the present invention is to provide a pumping device which obviates at least some of the drawbacks in the prior art as described above.

A further object of the present invention is to increase the efficiency of the pumping devices of known type, in particular of the pumps intended to process a liquid, for example water, to be dispensed on a surface or in an environment.

According to the invention, there is provided a pumping device for processing a liquid having the features set out in claim 1.

The intermediate body, which is positioned between the casing and the head, provides a seat inside which it is possible to house guide means, particularly conformed as guide sleeves, for guiding the pistons along the movement direction. This enables maintaining each piston guided near the corresponding chamber, thereby increasing precision of the movement of the pistons.

The intermediate body is distinct from the casing and the head.

In other words, the intermediate body is made from a single piece, or from a plurality of pieces, that are different from the pieces defining the casing and the head.

In an embodiment, each piston is guided not only by the guide means housed in the intermediate body, but is also guided in an end region thereof received in the casing. To this end, a recess or opening can be present in the casing, the recess or opening being delimited by an inner guide surface in which the piston slidably engages.

This allows maintaining the pistons guided both at a front end or front portion thereof, the front end or front portion being arranged near the corresponding chamber, and at a rear end or rear portion thereof, the rear end or rear portion being arranged in the casing. The precision of movement of the pistons is thus further increased.

Owing to the increased precision of movement of the pistons, it is possible to less intensely, and/or more evenly, stress the sealing means normally associated with each piston to prevent leakage of liquid from the chamber towards the casing. This allows reducing the wear of the sealing means, increasing the duration of the pumping device and avoiding decreases in its efficiency occurring due to the leakage of liquid.

Further features and advantages of the present invention will become more apparent from the indicative and thus non-limiting description of a preferred but non-exclusive embodiment of a pumping device, as illustrated in the appended drawings, in which:
Figure 1 is a sectional view of a pumping device for conveying a liquid onto a surface;
Figure 2 is a sectional view of the pumping device of Figure 1, in a plane perpendicular to the plane along which the cross-section of Figure 1 is taken;

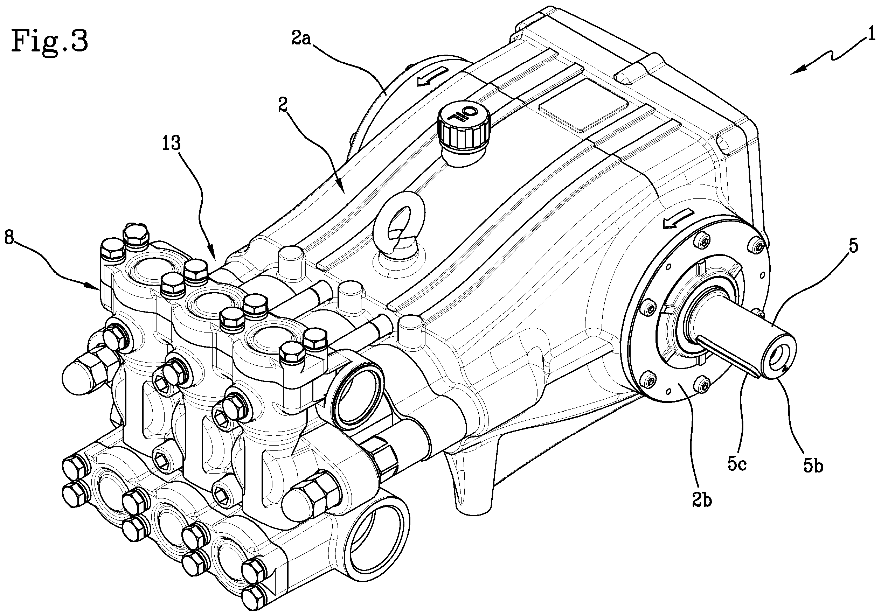

Figure 3 is a perspective view of the pumping device of Figure 1.

With reference to the appended figures, a pumping device according to the present invention is indicated in its entirety by reference number 1.

In particular, the pumping device 1 is configured to process a liquid, preferably water, intended to be sent to a point of use in order to be nebulized, or to be used as a washing liquid, or for still other objects. Specifically, the pumping device 1 is a volumetric-type piston pump.

The pumping device 1 comprises a casing 2 (or case) which houses a driving device 4 suitable for moving at least two pistons 3 along a movement direction A.

In particular, the driving device 4 comprises a driving shaft 5 which transmits the driving action of a motor (not shown in the appended figures) to the pistons 3.

The driving shaft 5 can be rotatingly driven by a motor for moving the pistons 3 forwards and backwards along the movement direction A.

To this end, the driving shaft 5 can be a crankshaft, i.e. comprise eccentric portions arranged for driving the respective pistons 3 through corresponding connecting rods. The latter connect the pistons 3 to the respective eccentric portions of the driving shaft 5.

In accordance with a possible embodiment and as shown in the appended figures, the pumping device 1 comprises three pistons 3 moved by the driving device 4.

In particular, the pistons 3 are aligned with each other, i.e. arranged so that their axes lie in a common plane.

In accordance with an alternative embodiment not shown in the appended figures, the pumping device 1 can comprise a different number of pistons.

Moreover, the pistons can be arranged in a manner such that their axes do not lie in a common plane, but are staggered relative to each other, without altering the scope of the inventive concept of the present invention.

A cover 2a is fixed to the casing 2, the cover 2a being suitable for rotatably supporting a first end 5a of the driving shaft 5, for example with the interposition of a bearing.

A closure element 2b is also fixed to the casing 2, the closure element 2b being arranged in a position opposite the cover 2a. The closure element 2b has a through hole suitable for allowing passage of the driving shaft 5 in such a way as to constrain it and support it with the casing 2, also in this case preferably through a bearing.

The driving shaft 5 has a second end 5b which extends outside the casing 2 in a position adjacent to the closure element 2b, in order to be connected to the motor not shown.

In this way, the driving shaft 5 is rotatably inserted inside the casing 2. The driving shaft 5 can further comprise a connecting element 5c arranged or mounted at the second end 5b to define a kinematic coupling with the above-mentioned motor.

This connecting element 5c can comprise, for example, a tongue or a coupling key.

As shown in the appended figures, the casing 2 has a plurality of openings 6, each of which is suitable for slidably receiving a respective piston 3.

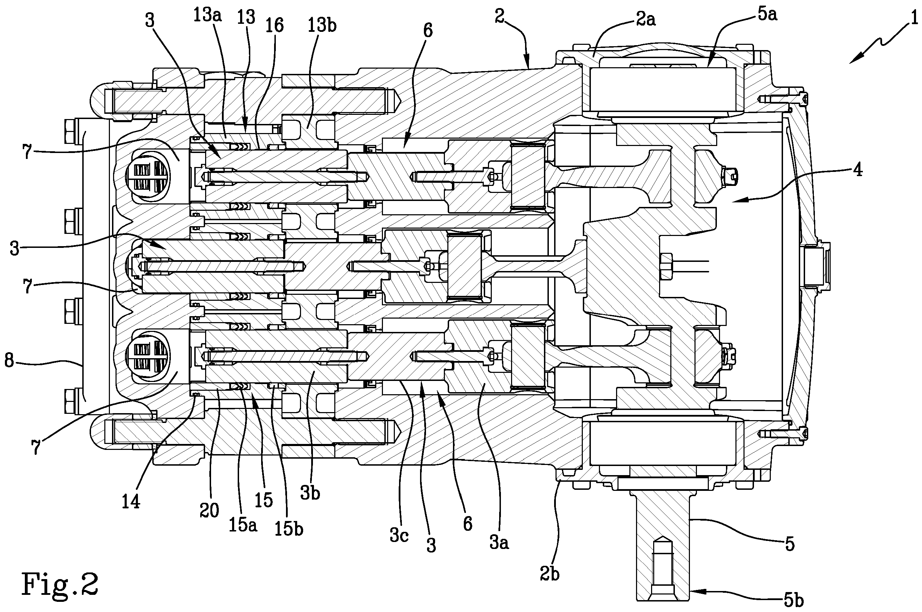

In more detail, each piston 3 is slidable inside the respective opening 6 of the pumping device 1 along the movement direction A in order to vary the volume of a pumping chamber 7, as shown in Figure 2.

Preferably, the piston 3 is defined by at least three elements, of which a first element 3a is connected to the driving device 4, in particular hinged to a respective connecting rod of the driving device 4. A second element 3b of the piston 3 defines an end element which partially delimits the chamber 7 and a third element 3c is interposed between the first element 3a and the second element 3b.

The third element 3c can have a smaller cross-section than the respective cross-sections of the first and of the second element 3a, 3b.

It is however possible, in principle, that the pistons 3 have a different conformation from that described above.

The casing 2 may be made of aluminium or cast iron.

Moreover, the device 1 comprises a head 8 inside of which the chambers 7 are obtained.

Each chamber 7 is in communication with the corresponding opening 6 such that each piston 3 delimits a portion of the chamber 7.

Each chamber 7 is provided with a suction valve 11 and a delivery valve 12 operable for enabling the fluid to respectively enter and exit the chamber 7.

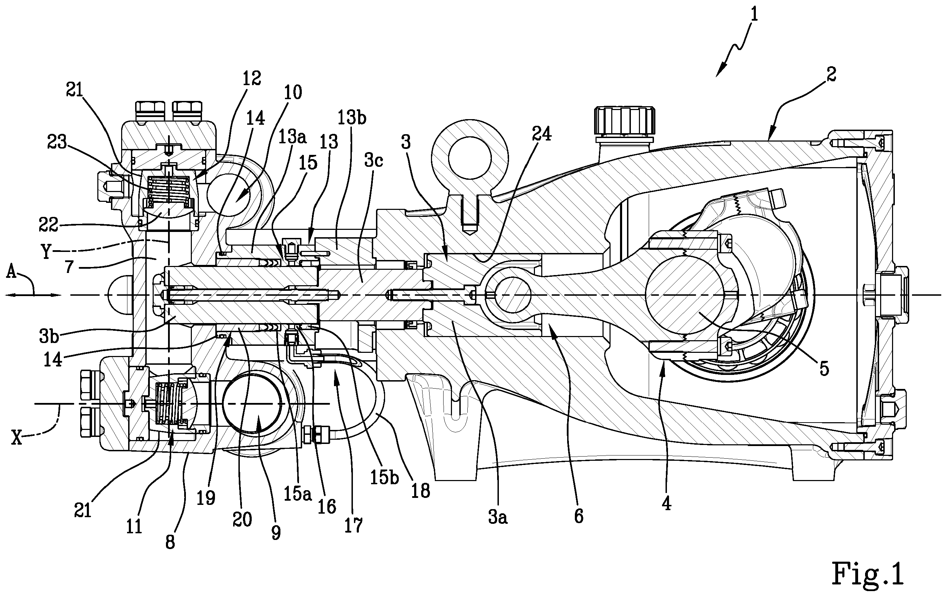

In the example shown, the suction valves 11 and the delivery valves 12 have substantially the same conformation and each one of them comprises a cup-shaped body 21 and a shutter 22. An elastic element 23 is housed in the cup-shaped body 21, the elastic element 23 being particularly shaped like a helical spring, which acts on the shutter 22. Each suction valve 11 extends along a respective axis X, shown in Figure 1. In the example shown, the X axis is the axis around which the cup-shaped body 21 and the elastic element 23 extend. Moreover, the shutter 22 is movable along the axis X.

The axes X of the suction valves 11 are parallel to each other.

In the example shown, the axes X of the suction valves 11 are horizontal. The axes X of the suction valves 11 may lie in a common plane.

Similarly, each delivery valve 12 extends along a respective axis Y which, in the example shown, is the axis along which the respective shutter 22 is movable. Moreover, the elastic element 23 and the cup-shaped body 21 of each delivery valve 12 extend around the axis Y.

The axes Y of the delivery valves 12 are parallel to each other.

In the example shown, the axes Y of the delivery valves 12 are vertical. The axes Y of the delivery valves 12 may lie in a further common plane. The axes Y of the delivery valves 12 are arranged transversely, in particular perpendicularly, with respect to the axes X of the suction valves 11.

The common plane defined by the axes X of the suction valves 11 is arranged transversely, for example perpendicularly, to the further common plane defined by the axes Y of the delivery valves 12.

A suction manifold 9 is further provided, through which the liquid to be processed by the pumping device 1 flows towards the suction valves 11. An outlet manifold 10 further enables the fluid coming from the chambers 7 to exit the pumping device 1.

Each suction valve 11 allows the respective chamber 7 to be selectively put in communication with the inlet manifold 9. Similarly, each delivery valve 12 allows the respective chamber 7 to be selectively put in communication with the outlet manifold 10.

When a piston 3 reaches the stroke end position shown in Figure 1, corresponding to the top dead centre, the volume of the corresponding chamber 7 is minimal. The suction valve 11 is arranged in a closed position, since the pressure present in the chamber 7, overcoming the resistance of the elastic element 23, pushes the shutter 22 of the suction valve 11 in contact with the respective seat obtained in the cup-shaped body 21. The chamber 7 is thus isolated from the suction manifold 9. Again due to the effect of the pressure present in the chamber 7, the shutter 22 of the delivery valve 12 is detached from the corresponding seat obtained in the cup-shaped body 21, overcoming the resistance of the elastic element 23. This allows putting the chamber 7 in fluid communication with the delivery manifold 10, thereby sending the liquid to be pumped towards the dispensing point.

On the contrary, when the piston 3 moves back towards the lower dead centre by moving along the movement direction A, the pressure of the liquid in the corresponding chamber 7 decreases. Consequently, the suction valve 11 opens, while the delivery valve 12 closes. The liquid to be pumped is thus allowed to enter the chamber 7.

The device 1 further comprises an intermediate body 13 clamped between the casing 2 and the head 8 by means of removable fastening members, for example screws.

The intermediate body 13 is distinct, i.e. separate, from the head 8 and the casing 2. In other words, the intermediate body 13 is defined by one or more pieces or components that are different from the head 8 and the casing 2.

The intermediate body 13 keeps the casing 2 spaced apart from the head 8. In other words, direct contact between the casing 2 and the head 8 is prevented by the intermediate body 13.

Each opening 6 in which a piston 3 is slidable backwards and forwards extends from the casing 2 to the head 8 through the intermediate body 13. In the example shown, the intermediate body 13 comprises a first portion 13a and a second portion 13b, arranged in sequence along the movement direction A.

The first portion 13a abuts against the head 8. The second portion 13b is interposed between the first portion 13a and the casing 2.

As shown in the appended figures, the first portion 13a and the second portion 13b of the intermediate body 13 each have a respective hole defining a respective portion of the opening 6.

Preferably, the hole of the second portion 13b has a greater inner diameter than the inner diameter of the hole of the first portion 13a.

Guide means 19 are provided in the intermediate body 13, the guide means 19 defining a guide for the sliding movement of the piston 3, so as to maintain the piston 3 axially guided while it moves backwards and forwards along the movement direction A. This makes it possible to reduce or even eliminate the risks that the piston 3 be arranged in a tilted position or otherwise misaligned position with respect to the theoretical movement direction A.

In the example shown, the second element 3b of the piston 3 is slidable inside the guide means 19, i.e. the portion of the piston 3 which delimits the chamber 7.

The guide means 19 can comprise a bushing or sleeve 20 for each piston 3, each sleeve 20 being housed inside the intermediate body 13, in particular inside the first portion 13a of the intermediate body 13. The sleeve 20 has a hole delimited by an inner guide surface along which the piston 3 slides.

In particular, the sleeve 20 is made of a non-hygroscopic technopolymer, for example charged polyphenylene sulphide (PPS), with a mixed charge comprised between 65% and 70%.

However, the sleeve 20 can be made of other materials, for example brass.

The piston 3 is inserted in the sleeve 20 with a limited radial clearance, in such a way as to allow the sliding of the piston, without causing misalignments between the axis of the piston 3 and the axis of the hole obtained in the sleeve 20.

In the example shown, the sleeve 20 abuts against the head 8.

As shown in Figure 1, a guide surface 24 is obtained for each piston 3 inside the casing 2 for guiding a portion of the piston 3 which is closer to the driving shaft 5 (or rear portion) during movement of the piston 3 along the movement direction A. The guide surface 24 partially delimits the opening 6, in particular it delimits a part of the opening 6 arranged near the drive shaft 5. In the example shown, the first element 3a of the piston 3 is slidable along the guide surface 24.

In the pumping device 1 shown in the Figures, each piston 3 is therefore guided, during its movement along the movement direction A, both in a front portion thereof and in a rear portion thereof. The front portion of the piston 3 can be defined as the portion of the piston 3 arranged in a position closer to the chamber 7, which is guided by the guide means 19, and in particular by the sleeve 20. The rear portion of the piston 3 can be defined as the portion of the piston 3 arranged in a position farthest from the chamber 7, i.e. closer to the driving shaft 5. The rear portion is guided by the guide surface 24.

Owing to the sleeve 20 and the guide surface 24, it is possible to guide each piston 3 near both its ends. This ensures that, while the piston 3 moves backwards and forwards inside the opening 6, the longitudinal axis of the piston 3 is substantially coincident with the longitudinal axis of the opening 6. Misalignments and/or inclinations of the piston 3 with respect to the opening 6 are thus limited or even avoided, and it is possible to increase the precision of movement of the piston 3.

The pumping device 1 can comprise one or more hydraulic seals 14, for example of the O-ring type, interposed between the intermediate body 13 and the head 8 and/or between the intermediate body 13 and the casing 2 so as to prevent leakage of liquid from the chamber 7.

The pumping device 1 further comprises sealing means 15 arranged along the opening 6 and associated with the piston 3 to provide a liquid seal on an outer surface of the piston 3.

In more detail, the sealing means 15 are configured to prevent a leakage of fluid from the chamber 7 towards the casing 2.

In particular, the sealing means 15 can comprise at least one annular seal radially interposed between the intermediate body 13 and the piston 3. The first portion 13a houses the sealing means 15. In other words, the sealing means 15 are preferably arranged on the first portion 13a of the intermediate body 13.

Preferably, the sealing means 15 comprise a first sealing element 15a located in a proximal position with respect to the chamber 7 and a second sealing element 15b located in a distal position with respect to the chamber 7.

The first sealing element 15a can be considered as a high-pressure sealing element, while the second sealing element 15b can be considered as a low-pressure sealing element. This is due to the fact that the first sealing element 15a works with a liquid having a higher pressure than the second sealing element 15b. In fact, the first sealing element 15a interacts with the liquid coming directly from the chamber 7, which therefore has a relatively high pressure. The second sealing element 15b instead interacts with a liquid whose pressure is lower.

The intermediate body 13 can have an inner annular protrusion 16 (i.e. a protrusion which projects towards the inside of the intermediate body 13) defining a pair of opposing shoulders, against which the first sealing element 15a and the second sealing element 15b respectively abut.

In the example shown, the first sealing element 15a is interposed, in a radial direction, between the piston 3 (and in particular the first element 3a of the piston 3) and the intermediate body 13 (and in particular the first portion 13a of the intermediate body 13). The first sealing element 15a is locked on the intermediate body 13 and the piston 3 slides inside it. Moreover, the first sealing element 15a is interposed, in an axial direction (i.e. parallel to the longitudinal axis of the corresponding piston 3), between the protrusion 16 of the intermediate body 13 and the sleeve 20. The second sealing element 15b is also interposed, in a radial direction, between the piston 3 and the intermediate body 13, in particular the first portion 13a of the intermediate body 13. The second sealing element 15b is locked on the intermediate body 13 and the piston 3 slides inside it.

In the axial direction, the second sealing element 15b is interposed between the protrusion 16 and the second portion 13b of the intermediate body 13.

As shown in Figure 1, the device 1 can also comprise connecting means 17 configured to allow the passage of the liquid between the suction manifold 9 and the second sealing element 15b.

The connecting means 17 can comprise a connection conduit 18 having an end that leads into the suction manifold 9 and a further end that leads into the intermediate body 13, near the second sealing element 15b.

In particular, the further end of the connection conduit 18 can be defined in a hole obtained in the protrusion 16 of the intermediate body 13, in a position interposed between the first sealing element 15a and the second sealing element 15b.

The connecting means 17 enable the fluid to pass from the suction manifold 9 to the second sealing element 15b or vice versa.

In particular, small quantities of liquid can flow from the suction manifold 9 towards the second sealing element 15b, so as to wet the second sealing element 15b during operation of the pumping device 1. The liquid that wets the second sealing element 15b, even if it consists of water alone, has a lubricant function on he second sealing element 15b. Hence, this liquid prevents the second sealing element 15b from working in dry conditions, which would cause rapid wear of the second sealing element 15b.

It can also happen that if the first sealing element 15a begins to wear, small amounts of liquid flow from the first sealing element 15a towards the second sealing element 15b. In this case, the connecting means 17 allow bringing the liquid coming from the first sealing element 15a towards the suction manifold 9, so that the liquid can be recirculated inside the pumping device 1.

It is observed that the first sealing element 15a and the second sealing element 15b have an increased duration compared with what occurred in known pumps.

In fact, by keeping each piston 3 guided, it is possible to decrease and render more uniform the stress that the piston 3 exerts on the first sealing element 15a and on the second sealing element 15b. This allows reducing the wear of the sealing elements 15a, 15b and consequently limiting the leakage of liquid through these elements, which maintains a high efficiency of the pumping device 1, in addition to lengthening its duration. Furthermore, by housing the first sealing element 15a and the second sealing element 15b inside the intermediate body 13, which is a component distinct from the head 8 and the casing 2, it is possible to avoid contact between the liquid processed by the pumping device 1 and the casing 2. This prevents oxidation phenomena from occurring in the casing 2, which further increases duration of the pumping device 1.

## Claims

1. A pumping device (1) for processing a liquid, comprising:
- a plurality of pistons (3), each of which is slidable along a movement direction (A) in order to vary volume of a corresponding chamber (7);
- a casing (2) inside of which a driving device (4) is housed for moving each piston (3) of the plurality of pistons (3) along the movement direction (A);
- a head (8) inside of which the chambers (7) are at least partially obtained;
- a plurality of suction valves (11), each one of which is associated with a chamber (7) and is operable for enabling the liquid to enter the chamber (7);
- a plurality of delivery valves (12), each one of which is associated with a chamber (7) and is operable for enabling the liquid to exit the chamber (7);
wherein each suction valve (11) has an axis (X) arranged transversely to a further axis (Y) of the delivery valve (12) associated with the same chamber (7);
the pumping device (1) further comprising an intermediate body (13) interposed between the casing (2) and the head (8), the intermediate body (13) being distinct from the casing (2) and from the head (8), sealing means (15) being housed in the intermediate body (13) to prevent leakage of fluid from each chamber (7) towards the casing (2), the sealing means (15) comprising a first sealing element (15a), the intermediate body (13) being provided with guide means (19) for guiding each piston (3) along the movement direction (A), **characterized in that** the guide means (19) comprise, for each piston (3), a sleeve (20) housed in the intermediate body (13), the sleeve (20) having a hole in which the piston (3) is slidable, the first sealing element (15a) surrounding the piston (3) in a position closer to the chamber (7) and being interposed, in a radial direction, between the piston (3) and the intermediate body (13), the sealing means (15) housed in the intermediate body (13) further comprising a second sealing element (15b) surrounding the piston (3) in a position further away from the chamber (7).

2. A pumping device according to claim 1, wherein the intermediate body (13) is clamped between the casing (2) and the head (8) and keeps the casing (2) spaced from the head (8).

3. A pumping device according to claim 1 or 2, wherein each piston (3) is slidable inside an opening (6) which extends in the casing (2) and continues to the head (8) through the intermediate body (13).

4. A pumping device according to claim 3, wherein at least a portion of the opening (6) provided in the casing (2) is delimited by a guide surface (24) for guiding each piston (3) along the movement direction (A), in an area of the piston (3) proximal to the driving device (4), so that each piston (3) has a rear portion guided by the guide surface (24) and a front portion guided by the sleeve (20) when the piston (13) is moved along the advancement direction (A).

5. A pumping device according to any preceding claim, wherein the intermediate body (13) has a protrusion (16) which projects towards the inside of the intermediate body (13), the first sealing element (15a) being axially interposed between the sleeve (20) and the protrusion (16).

6. A pumping device according to claim 5, wherein the second sealing element (15b) is housed inside the intermediate body (13) and abuts against a side of the protrusion (16) opposite to a further side of the protrusion (16) against which the first sealing element (15a) abuts.

7. A pumping device according to any preceding claim, and further comprising connecting means (17) for enabling the liquid to flow between a suction of the pumping device (1) and the sealing means (15).

8. A pumping device according to claim 7, wherein the connecting means (17) comprise a connection conduit (18) having an end that leads into a suction manifold (9) communicating with the suction valves (11), the connection conduit (18) having a further end that leads into the intermediate body (13) in a position interposed between the first sealing element (15a) and the second sealing element (15b).

9. A pumping device according to any preceding claim, wherein the intermediate body (13) is made up of two separate parts and comprises a first part (13a) in which the guide means (19) are housed, the first part (13a) being adjacent to the head (8), and a second part (13b) interposed between the first part (13a) and the casing (2).

## Patentansprüche

1. Pumpvorrichtung (1) zur Verarbeitung einer Flüssigkeit, umfassend:
- eine Vielzahl an Kolben (3), von denen ein jeder entlang einer Bewegungsrichtung (A) verschiebbar ist, um das Volumen einer entsprechenden Kammer (7) zu variieren;
- ein Gehäuse (2), in dem eine Antriebsvorrichtung (4) untergebracht ist, um einen jeden Kolben (3) der Vielzahl von Kolben (3) entlang der Bewegungsrichtung (A) zu bewegen;
- einen Kopf (8), in dem die Kammer (7) zumindest teilweise ausgebildet sind;
- eine Vielzahl an Saugventilen (11), von denen ein jedes mit einer Kammer (7) assoziiert und bedienbar ist, um einer Flüssigkeit zu erlauben, in die Kammer (7) einzuströmen;
- eine Vielzahl an Verteilerventilen (12), von denen ein jedes mit einer Kammer (7) assoziiert und bedienbar ist, um der Flüssigkeit zu erlauben, aus der Kammer (7) zu strömen,
wobei ein jedes Saugventil (11) eine Achse (X) aufweist, die quer zu einer weiteren Achse (Y) des Verteilerventils (12), das mit derselben Kammer (7) assoziiert ist, angeordnet ist,
wobei die Pumpvorrichtung (1) zudem einen Zwischenkörper (13) umfasst, der zwischen dem Gehäuse (2) und dem Kopf (8) eingesetzt ist, wobei der Zwischenkörper (13) vom Gehäuse (2) und vom Kopf (8) getrennt ist, Dichtungsmittel (15) im Zwischenkörper (13) untergebracht sind, um Flüssigkeitsleckagen aus einer jeden Kammer (7) ins Gehäuse (2) zu vermeiden, wobei die Dichtungsmittel (15) ein erstes Dichtungselement (15a) umfassen, der Zwischenkörper (13) mit Führungsmitteln (19) zum Führen eines jeden Kolbens (3) entlang der Bewegungsrichtung (A) ausgestattet ist, **dadurch gekennzeichnet, dass** die Führungsmittel (19) für einen jeden Kolben (3) eine Hülse (20) umfassen, die im Zwischenkörper (13) untergebracht ist, wobei die Hülse (20) ein Loch aufweist, in dem der Kolben (3) verschiebbar ist, die ersten Dichtungselemente (15a) den Kolben (3) in einer Position, die näher an der Kammer (7) ist, umgeben und in einer radialen Richtung zwischen dem Kolben (3) und dem Zwischenkörper (13) eingesetzt sind, wobei die im Zwischenkörper (13) untergebrachten Dichtungsmittel (15) zudem ein zweites Dichtungselement (15b) umfassen, das den Kolben (3) in einer Position umgibt, die weiter von der Kammer (7) entfernt ist.

2. Pumpvorrichtung nach Anspruch 1, wobei der Zwischenkörper (13) zwischen dem Gehäuse (2) und dem Kopf (8) festgespannt ist und das Gehäuse (2) vom Kopf (8) beabstandet hält.

3. Pumpvorrichtung nach Anspruch 1 oder 2, wobei ein jeder Kolben (3) in einer Öffnung (6) verschiebbar ist, die sich im Gehäuse (2) erstreckt und durch den Zwischenkörper (13) zum Kopf (8) weiterführt.

4. Pumpvorrichtung nach Anspruch 3, wobei mindestens ein Abschnitt der im Gehäuse (2) bereitgestellten Öffnung (6) durch eine Führungsoberfläche (24) zum Führen eines jeden Kolbens (3) entlang der Bewegungsrichtung (A) in einem Bereich des Kolbens (3) proximal zur Antriebsvorrichtung (4) bereitgestellt ist, sodass ein jeder Kolben (3) einen rückseitigen Abschnitt aufweist, der von der Führungsoberfläche (24) geführt wird, und einen vorderseitigen Abschnitt, der von der Hülse (20) geführt wird, wenn der Kolben (13) entlang der Vorschubrichtung (A) bewegt wird.

5. Pumpvorrichtung nach einem der vorhergehenden Ansprüche, wobei der Zwischenkörper (13) einen Vorsprung (16) aufweist, der hinführend zur Innenseite des Zwischenkörpers (13) hervorspringt, wobei das erste Dichtungselement (15a) axial zwischen der Hülse (20) und dem Vorsprung (16) eingesetzt ist.

6. Pumpvorrichtung nach Anspruch 5, wobei das zweite Dichtungselement (15b) im Zwischenkörper (13) untergebracht ist und an einer Seite des Vorsprungs (16) anschlägt, der einer weiteren Seite des Vorsprungs (16) entgegengesetzt ist, an dem das erste Dichtungselement (15a) anschlägt.

7. Pumpvorrichtung nach einem der vorhergehenden Ansprüche, zudem umfassend Verbindungsmittel (17), um der Flüssigkeit zu erlauben, zwischen einer Saugseite der Pumpvorrichtung (1) und den Dichtungsmitteln (15) zu strömen.

8. Pumpvorrichtung nach Anspruch 7, wobei die Verbindungsmittel (17) eine Verbindungsleitung (18) umfassen, aufweisend ein Ende, das in einen Saugstutzen (9) führt, der mit den Saugventilen (11) kommuniziert, wobei die Verbindungsleitung (18) ein weiteres Ende aufweist, das in den Zwischenkörper (13) in eine Position, die zwischen dem ersten Dichtungselement (15a) und dem zweiten Dichtungselement (15b) eingesetzt ist, führt.

9. Pumpvorrichtung nach einem der vorhergehenden Ansprüche, wobei der Zwischenkörper (13) aus zwei separaten Teilen besteht und einen ersten Teil (13a) umfasst, in dem die Führungsmittel (19) untergebracht sind, wobei der erste Teil (13a) an den Kopf (8) angrenzt, und einen zweiten Teil (13b), der zwischen dem ersten Teil (13a) und dem Gehäuse (2) eingesetzt ist.

## Revendications

1. Dispositif de pompage (1) pour traiter un liquide, comprenant:
- une pluralité de pistons (3), dont chacun peut coulisser le long d'une direction de déplacement (A) afin de faire varier le volume d'une chambre correspondante (7);
- une enveloppe (2) à l'intérieur de laquelle est logé un dispositif d'entraînement (4) pour déplacer chaque piston (3) de la pluralité de pistons (3) le long de la direction de déplacement (A);
- une tête (8) à l'intérieur de laquelle les chambres (7) sont au moins partiellement obtenues;
- une pluralité de vannes d'aspiration (11), chacune d'entre elles étant associée à une chambre (7) et pouvant fonctionner pour permettre au liquide d'entrer dans la chambre (7);
- une pluralité de soupapes de refoulement (12), chacune d'entre elles étant associée à une chambre (7) et pouvant fonctionner pour permettre au liquide de sortir de la chambre (7);
dans lequel chaque vanne d'aspiration (11) comporte un axe (X) disposé transversalement à un autre axe (Y) de la soupape de refoulement (12) associée à la même chambre (7);
le dispositif de pompage (1) comprenant de plus un corps intermédiaire (13) interposé entre l'enveloppe (2) et la tête (8), le corps intermédiaire (13) étant distinct de l'enveloppe (2) et de la tête (8), des moyens d'étanchéité (15) étant logés dans le corps intermédiaire (13) pour empêcher la fuite de fluide de chaque chambre (7) vers l'enveloppe (2), les moyens d'étanchéité (15) comprenant un premier élément d'étanchéité (15a), le corps intermédiaire (13) étant pourvu de moyens de guidage (19) pour guider chaque piston (3) le long de la direction de déplacement (A), **caractérisé en ce que** les moyens de guidage (19) comprennent, pour chaque piston (3), un manchon (20) logé dans le corps intermédiaire (13), le manchon (20) comportant un trou dans lequel le piston (3) peut coulisser, le premier élément d'étanchéité (15a) entourant le piston (3) dans une position plus proche de la chambre (7) et étant interposé, dans une direction radiale, entre le piston (3) et le corps intermédiaire (13), les moyens d'étanchéité (15) logés dans le corps intermédiaire (13) comprenant de plus un deuxième élément d'étanchéité (15b) entourant le piston (3) dans une position plus éloignée de la chambre (7).

2. Dispositif de pompage selon la revendication 1, dans lequel le corps intermédiaire (13) est serré entre l'enveloppe (2) et la tête (8) et maintient l'enveloppe (2) espacé de la tête (8).

3. Dispositif de pompage selon les revendications 1 ou 2, dans lequel chaque piston (3) peut coulisser à l'intérieur d'une ouverture (6) qui se prolonge dans l'enveloppe (2) et continue vers la tête (8) à travers le corps intermédiaire (13).

4. Dispositif de pompage selon la revendication 3, dans lequel au moins une partie de l'ouverture (6) prévue dans l'enveloppe (2) est délimitée par une surface de guidage (24) pour guider chaque piston (3) le long de la direction de déplacement (A), dans une zone du piston (3) proximale au dispositif d'entraînement (4), de sorte que chaque piston (3) comporte une partie arrière guidée par la surface de guidage (24) et une partie avant guidée par le manchon (20) lorsque le piston (13) est déplacé le long de la direction d'avancement (A).

5. Dispositif de pompage selon l'une quelconque des revendications précédentes, dans lequel le corps intermédiaire (13) comporte une saillie (16) qui dépasse vers l'intérieur du corps intermédiaire (13), le premier élément d'étanchéité (15a) étant interposé axialement entre le manchon (20) et la saillie (16).

6. Dispositif de pompage selon la revendication 5, dans lequel le deuxième élément d'étanchéité (15b) est logé à l'intérieur du corps intermédiaire (13) et vient se mettre en butée contre un côté de la saillie (16) opposé à un autre côté de la saillie (16) contre lequel vient se mettre en butée le premier élément d'étanchéité (15a).

7. Dispositif de pompage selon l'une quelconque des revendications précédentes, et comprenant de plus des moyens de raccordement (17) pour permettre au liquide de s'écouler entre une aspiration du dispositif de pompage (1) et les moyens d'étanchéité (15).

8. Dispositif de pompage selon la revendication 7, dans lequel les moyens de raccordement (17) comprennent un conduit de raccordement (18) comportant une extrémité qui mène à un collecteur d'aspiration (9) communiquant avec les soupapes d'aspiration (11), le conduit de raccordement (18) comportant une autre extrémité qui mène au corps intermédiaire (13) dans une position interposée entre le premier élément d'étanchéité (15a) et le deuxième élément d'étanchéité (15b).

9. Dispositif de pompage selon l'une quelconque des revendications précédentes, dans lequel le corps intermédiaire (13) est constitué de deux parties séparées et comprend une première partie (13a) dans laquelle sont logés les moyens de guidage (19), la première partie (13a) étant adjacente à la tête (8) et une deuxième partie (13b) interposée entre la première partie (13a) et l'enveloppe (2).
